# EUROPEAN PATENT APPLICATION

(11) **EP 2 884 133 A1**
(43) Date of publication of application: **17.06.2015**
(21) Application number: 13196949.5
(22) Date of filing: 12.12.2013
(51) Int. Cl.: F16H 7/02

(54) **Belt drive with fixed large disc**

(71) Applicant: Fobox AS, 0107 Oslo (NO)
(72) Inventor: Tjensvoll, Gaute, 0778 Oslo (NO)
(74) Representative: Protector IP Consultants AS

(57) **Abstract**

A transmission unit having a large belt disc (10;34;44) with at least one large belt (11;35;43) extending around and in contact with the large belt disc, and a high speed shaft (7;42). The invention is distinctive in that the transmission unit comprises a planetary carrier (13;20;33), said planetary carrier carrying at least two planetary belt pulleys (9;37), each belt pulley having a belt pulley shaft (6;26;40) which is in rotational coupling with the at least one large belt (11;35;43), each planetary pulley having at least one planetary belt (8;38), said planetary belt(s) rotationally coupling said planetary pulleys with said high speed shaft (7;42), said large belt disc being stationary mounted.

## Description

### FIELD OF THE INVENTION

The present invention in general relates to a drive device, which e.g., can be used for a wind turbine or tidal plants but could be used in opposite direction with a motor that drives a winch, a ship propulsion drive, thrusters or wheel on a transverse carriage. The drive device is adapted to have a simplified and compact construction, ensures that the torque over the drive shaft is balanced, is light weight and also has substantially reduced number of components and requires minimum maintenance.

### TECHNICAL BACKGROUND OF THE INVENTION

In most of today wind turbines the drive unit is placed in a nacelle, which also carries the wind turbine rotor. The nacelle is necessarily arranged on top of a high mast and rotates so that the rotor is always facing the wind.

Such placement of the drive unit results in a great weight at the top of the mast and that access for maintenance is a challenge. Yet it is this position of the drive unit and the generators that is used extensively as the alternative that the rotational torque must be transmitted via a shaft through the mast, this leads to losses and requires that the mast can absorb the reaction torque from the rotation shaft.

There is an urgent need to simplify the drive unit and make it lighter. There is also a need to make access for maintenance easier. These are the main aims of the present invention, and is achieved by the features that appear in the characterizing part of claim 1.

A drive unit for a wind turbine is described in publication WO2010/086362 by the same applicant. This prior art relates to a wind turbine drive which uses belts to transmit the rotation from the rotor to a generator.

Publication WO 2011/134974 describes a drive device which e.g can be used for a winch or a tidal power plant where the drum are connected to a large belt pulley being rotatable connected to a set of secondary shaft by means of belts/chains and a motor is in rotational connection with the secondary shafts.

It is well known from WO 2008/028335 and JP2005023893 to use a belt to transmit the rotation from the rotor to a generator. However, the present invention aims to utilize the characteristics of the belt operation, or possibly the chain operation, better so that a more compact drive device could be achieved with additional operational benefits.

None of the abovementioned publications shows a drive unit with a planet belt carrier with belt pulleys which are in rotational coupling with at stationary mounted large belt. The belt pulleys are also in rotational coupling with a shaft connected to the driven unit or a drive unit.

### OBJECTS OF THE INVENTION

The present invention aims to meet the above need hitherto not taught by prior art, by providing a specially constructed drive device for a wind turbine, which by virtue of its specially configured construction constitutes a light weight and compact drive device and plays a significant role in running the electric generator smoothly and efficiently and gearing it up.

Another object of the present invention is to provide a drive device for a wind turbine apart from being compact and light weight ensures that the torque over the drive shaft is balanced and simultaneously does not require heavy maintenance, due to lesser number of components

It is another object of the present invention to provide a specially constructed drive device for a tidal power plant, which by virtue of its specially configured construction constitutes a light weight and compact drive device and plays a significant role in running the electric generator smoothly and efficiently and gearing it up.

Another object of the present invention is to provide a drive device for a tidal plant apart from being compact and light weight ensures that the torque over the drive shaft is balanced and simultaneously does not require heavy maintenance, due to lesser number of components

It is a further object of the present invention to provide a specially constructed drive device for a winch, which by virtue of its specially configured construction constitutes a light weight and compact drive device and plays a significant role in running the winch smoothly and efficiently.

Another object of the present invention is to provide a drive device for a winch apart from being compact and light weight ensures that the torque over the drive shaft is balanced and simultaneously does not require heavy maintenance, due to lesser number of components.

It is a further object of the present invention to provide a specially constructed drive device for a wheel on a traverser carriage, which by virtue of its specially configured construction constitutes a light weight and compact drive device and plays a significant role in running the wheel smoothly and efficiently.

Another object of the present invention is to provide a drive device for a wheel on a traverser carriage apart from being compact and light weight ensures that the torque over the drive shaft is balanced and simultaneously does not require heavy maintenance, due to lesser number of components

In addition the present invention discloses some advantageous features still not disclosed in prior art.

All through the specification including the claims the words "large belt disc", "large belt", "high speed shaft", "planetary carrier", "planetary belt pulley", "belt pulley shaft", "planetary belt", "small belt pulley", "wind turbine rotor", "wave power rotor", "winch", "traverser carriage" and "wheel motor" are to be interpreted in the broadest sense of the respective terms and includes all similar items in the field known by other terms, as may be clear to persons skilled in the art. Restriction/limitation, if any, referred to in the specification, is solely by way of example and understanding the present invention.

### SUMMARY OF THE INVENTION

The invention provides a transmission unit connected in one end to o a driving unit, said transmission unit having a large belt disc with at least one large belt extending around and in contact with the large belt disc, and a high speed shaft. The invention is distinctive in that the transmission unit comprises a planetary carrier being coupled to said driving unit, said planetary carrier carrying at least two planetary belt pulleys, each belt pulley having a belt pulley shaft which is in rotational coupling with the at least one large belt, each planetary pulley having at least one planetary belt, said planetary belt(s) rotationally coupling said planetary pulleys with said high speed shaft, said large belt disc being stationary mounted, said high speed shaft being coupled to a driven unit.

The invention provides also a transmission unit connected in one end to a driven unit, said transmission unit having a large belt disc with at least one large belt extending around and in contact with the large belt disc, and a high speed shaft. The invention is distinctive in that the transmission unit comprises a planetary carrier being coupled to said driven unit, said planetary carrier carrying at least two planetary belt pulleys, each belt pulley having a belt pulley shaft which is in rotational coupling with the at least one large belt, each planetary pulley having at least one planetary belt, said planetary belt(s) rotationally coupling said planetary pulleys with said high speed shaft, said large belt disc being stationary mounted, said high speed shaft being coupled to a driving unit.

The invention preferably comprises additional features, as defined in dependent claims.

The above embodiments thus reveal construction of a drive unit which is very compact, light weight , simplified due to lesser number of the components and consequently need minimal maintenance. This arrangement also ensures that the torque over the high speed shaft is perfectly balanced and conversion of low rotational speed to high rotational speed. Consequently, greater speed are achieved thereby gaining high torque. Furthermore, this arrangement also ensures conversion of high rotational speed to low rotational speed.

### SHORT DESCRIPTION OF THE FIGURES

Having described the main features of the invention above, a more detailed and non-limiting description of some exemplary embodiments will be given in the following with reference to the drawings, in which:
Fig 1 is a perspective view of the drive device according to a preferred embodiment of the present invention with a wind turbine rotor attached to the drive device viewed from the side of the winch.
Fig 2 is another perspective view of the drive device according to a preferred embodiment of the present invention with the wind turbine rotor end facing away.
Fig 3 is yet another perspective view of the drive device according to a preferred embodiment of the present invention with the generator end facing away.
Fig 4 is a schematic view of the drive device according to a preferred embodiment of the present invention viewed from the top.
Fig 5 is a schematic view of the drive device according to another preferred embodiment of the present invention, viewed without belts on the drive device.
Fig 6 is a schematic view of the drive device shown in the accompanying figure 5 with the belts.
Fig 7 is a schematic view of the planet carrier according to a preferred embodiment of the present invention.
Fig 8 is a schematic view of the drive device according to a preferred embodiment of the present invention where the driven unit is a wheel motor of a traverser carriage.
Fig 9 is a another schematic view of the wheel motor shown in Fig 8, illustrated without the motor.
Fig 10 is yet another schematic view of the transmission unit of the wheel motor shown in Fig. 8-9.
Fig 11 and 12 is sectional views of the wheel motor shown in Fig. 8-10.
Fig. 13 is a schematic view of a possible embodiment of the wheel motor in Fig. 8-12 where the at least one large belt disc is arranged outside of the wheel motor.

### DETAILED DESCRIPTION OF THE INVENTION

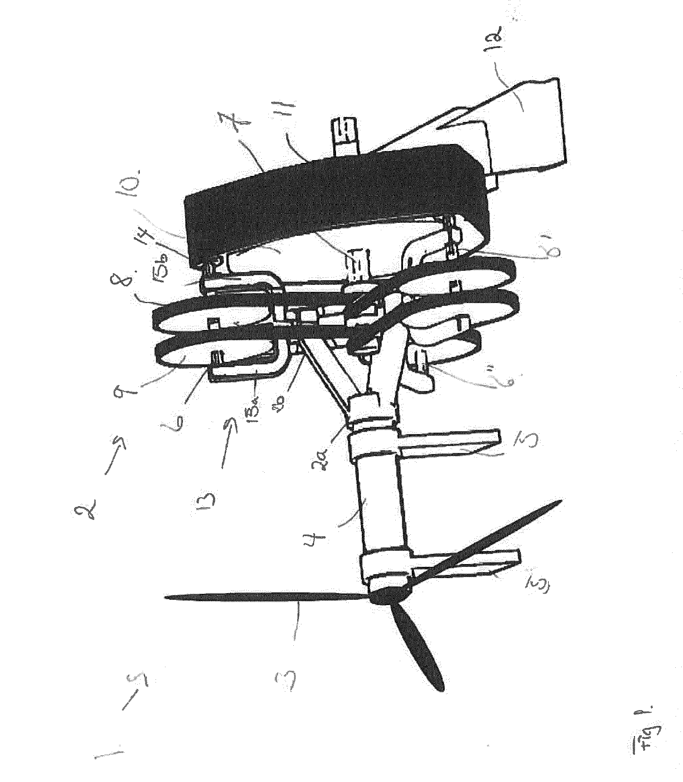

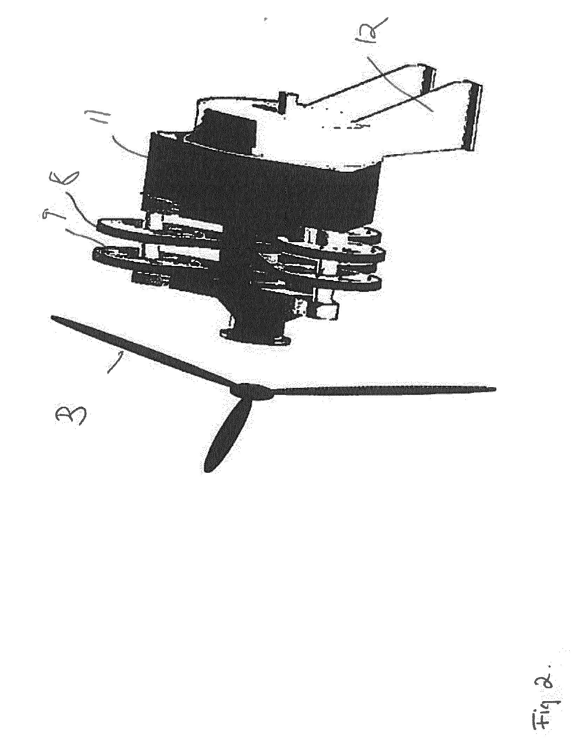

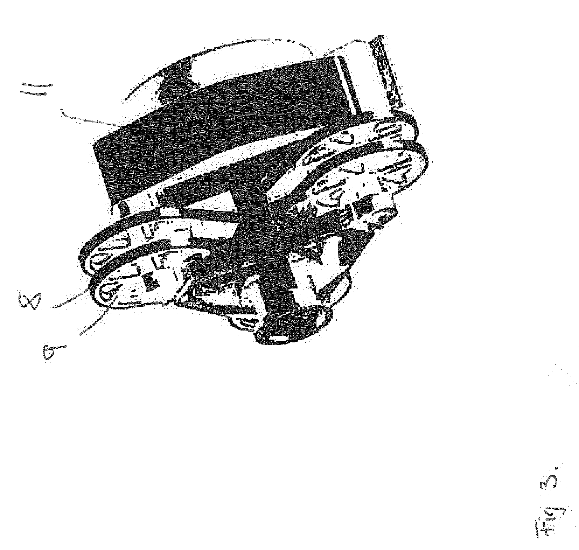

The accompanying Figure 1 illustrates an embodiment of the driving device for a wind turbine according to the present invention. The accompanying Figure 2 and 3 shows the same device in different angles. In this context it is hereby clarified that the windmill illustrated in the accompanied figures 1-7 is only by way of example and illustration and such device is equally effective in its application for running electric generators in tidal power plants.
It could also be understood by a person skilled in the art that the motion initiates from the opposite direction, the initial prime mover being a winch drum, a motor for driving floating vessel propellers, a motor for running a wheel on a traverse carriage, hereinafter called a wheel motor or similar could also essentially be run on the same principle and are possible embodiments of the present invention. In this case the generator is replaced by a drive unit such as a motor.

The components of the drive device 1 according to fig 1, 2 and 3 are further explained in the following. The figures shows wind turbine rotor 3, a wind turbine shaft 4 connected to the wind turbine rotor 3, a transmission unit 2 such as a planetary belt drive device connected to the other end of the wind turbine shaft 4.

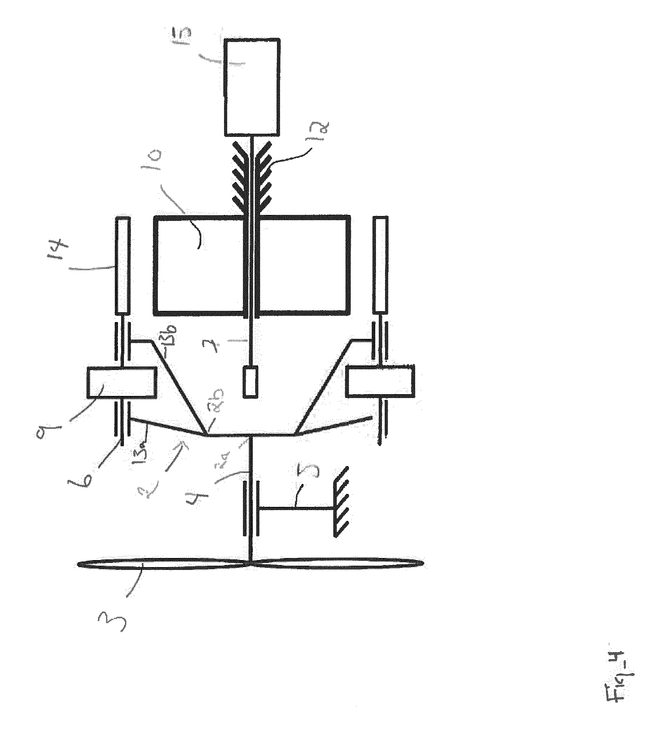

The drive device 1 further comprises a high speed shaft 7 which is in rotational coupling with the transmission unit 2 at one end and connected to a generator 15 (Fig. 4) at the other end of the high speed shaft 7. The high speed shaft 7 extending through a large belt disc 10 which are positioned between the transmission unit 2 and the generator 15. Bearings are disposed in the coupling between the high speed shaft 7 and the large belt disc 10 allowing the high speed shaft 7 to rotate within the large belt disc 10. At least one large belt 11 is extending around the large belt disc 10. The large belt disc 10 is provided with serrations (not shown) along respective circumferential surfaces for ensuring proper gripping during running condition. Further each belt is provided with teeth/grooves (not shown) for ensuring proper gripping during running condition.

Figure 1 further illustrates the drive device comprising one end 2a connected to the wind turbine shaft 4 facing the wind turbine rotor 3. The shaft 4 is in fixedly connection with both the wind turbine rotor 3 and the transmission unit 2 so that the wind turbine rotor 3 transferring rotation to the transmission unit 2.
It should be understood to persons skilled in the art that other connections between the wind turbine rotor 3 and the planetary belt drive 2 are also possible. The wind turbine rotor 3 may for instance be coupled directly to the planetary belt drive 2 without using the wind turbine shaft 4. A clutch which controls the transmission of power motion mounted between the turbine rotor and the transmission unit is also possible embodiments of the invention.

The transmission unit 2 comprises a planetary carrier 13, the large belt disc 10 , the large belt 11 and the highs speed shaft 7.
The planet carrier 13 will be further described in the following. The planet carrier 13 shown in fig 1 has a structure with three legs 2b extending towards the large belt disc 10, the three legs having an angular distance from each other. This structure may have other shapes intended for the purpose, for instance a vertical plate, circular or non circular shape, compact or with a plurality of openings. The planetary carrier 13 comprising at the periphery or end of the structure 2, a U-shaped component with a first planet carrier member 15a and a second planet carrier member 15b which is connected to each of the legs 2b supporting a belt pulley shaft 6. The belt pulley shaft 6 extending from one of the free ends of the of the first planet carrier member15a, through the other free end of the second planet carrier member 15b. The belt pulley shaft 6 is substantially parallel to the wind turbine shaft 4 and the high speed shaft 7. The belt pulley shaft 6 is rotatable relative the planet carrier members 15a, 15b. A small belt pulley 14 is arranged at the free end of the belt pulley shaft 6, said pulley 14 is arranged between the large belt disc10 and the large belt 11. It is also a possible embodiment of the invention that the end of the belt pulley shaft 6 facing the large belt disc 10 is in direct contact with the large belt 11, that is, without the small belt pulley 14 mounted on the belt pulley shaft 6.

At least one belt pulley 9 is connected to each of the belt pulley shaft 6, the shaft 6 passing through the center of the belt pulley 9. The belt pulley and the small belt pulley 14 are rotationally coupled to the same belt pulley shaft 6.

All said pulley may be provided with serrations along respective circumferencial surface for ensuring gripping during running condition.
Preferably each belt is provided with teeth/grooves for ensuring proper gripping during running condition.

A small planetary belt 8 is extending around each of the belt pulley 9 and the high speed shaft 7. The belt pulley 9 and the high speed shaft 7 are in rotatable connection.
In the figures 1-3 there are shown a possible embodiment of the invention with a planetary carrier 13 with three belt pulley shafts 6, where at each belt pulley shaft 7 there are arranged two belt pulleys 9 and two planetary belt 8 parallel to each other.

It should also be understood to persons skilled in the art that the drive device according to the present invention is applicable with other designs of the planetary carrier 13. It is a possible embodiment of the invention that belt pulley shaft 6 having two or more planetary belt pulleys 9 arranged parallel to each other and rotationally coupled to the same belt pulley shaft 6. A single planter belt pulley arranged on the belt pulley shaft is also an embodiment of the invention.
Each angular positioned planetary belt pulley 9 could also have one or more planetary belts 8 arranged parallel to each other on the planetary belt pulleys 9. A reduction or increasing of the number of belt pulley shafts 6 mounted on the planetary carrier 13 are also possible embodiments of the invention, it is crucial to the performance of the invention that the number of belt pulleys shafts 6 is two or more.

There are also support members (5, 12) to support the structure. In the drawings the support members 5 are connected to the wind turbine shaft 4 and brackets 12 connected to the large belt disc.

Now the rotational connections are achieved by a system of operatively connected planetary belts 8. This facilitates that the construction of the drive unit 1 is very compact, light weight, simplified due to lesser number of the components and consequently needs minimal maintenance. This also ensures that the torque over the drive shaft is perfectly balanced. Due to very simplified connectivity between the various components in rotational motion, through a simple arrangement of planetary belts 8, the requirement for increased number of components are done away with which was hitherto unknown. This arrangement also ensures conversion of low rotational speed to high rotational speed and achieving greater speed. Consequently gaining high torque is also ensured. How the drive device works through a simple arrangement of belts is now explained below with reference to the accompanying figures 4-7.

Figure 4 is a schematic view of the drive device described in figure 1-3 without belts. The lines highlighted are stationary parts of the drive device 1 and the other lines are rotatable parts of the drive device 1.

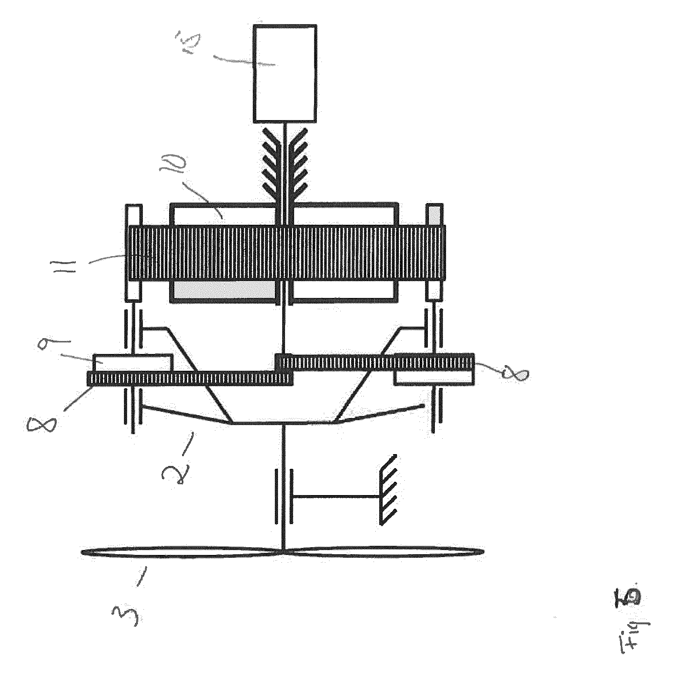

Figure 5 is a schematic view of the drive device described in figure 1-4 with belts.

The rotation of the wind turbine rotor 3 will lead to a rotation of the planetary carrier 13 in the same direction as the wind turbine rotor 3. This will in turn be transmitted to the small belt pulley 14 because of the rotational movement of the small belt pulley 14 relative the large belt 11. The belt pulley 9 and the belt pulley shaft 6 will in turn rotate in the same direction as the small belt pulley 14 and the rotation will be transmitted to the high speed shaft 7 and on to the generator 15 via the planetary belt 8. If there is no small belt pulley 14 the belt pulley shaft 6 is in direct rotational coupling with the large belt 11.

The belt pulley 9 has a significantly larger diameter than the high speed shaft 7, this will cause a larger rotational speed of the high speed shaft 7 than the rotational speed of the belt pulley 9.

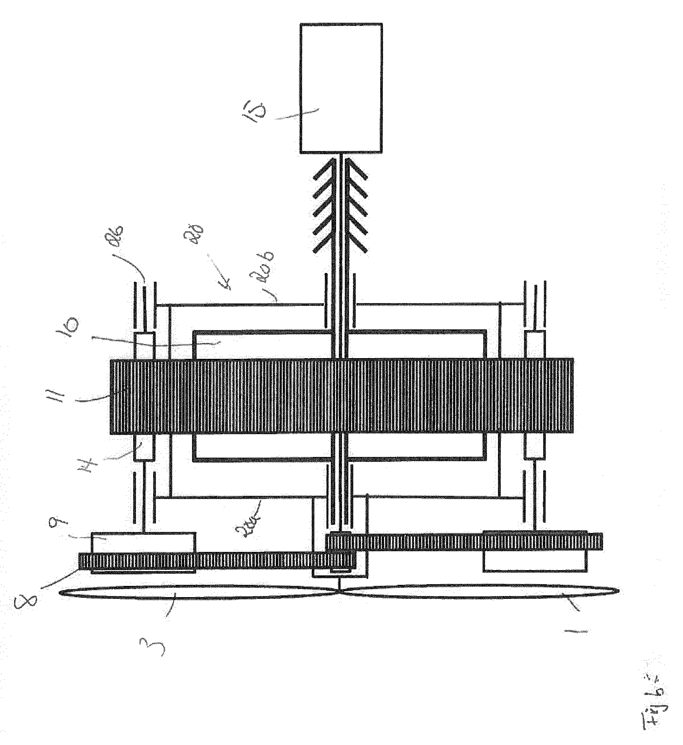

Figure 6 shows another possible embodiment of the invention where the planetary carrier 20 is arranged with one member on each side of the large belt disc10, a first planetary member 20a is arranged between the wind turbine rotor 3 and the belt disc 10, and a second planetary member 20b is arranged between the large belt disc 10 and the generator 15. In this embodiment of the invention the belt pulley shaft 26 extends from belt pulley 9 through the first planetary member 20a and the small belt pulley 14, arranged between the belt 11 and the belt disc 10, to the second planetary member 20b.

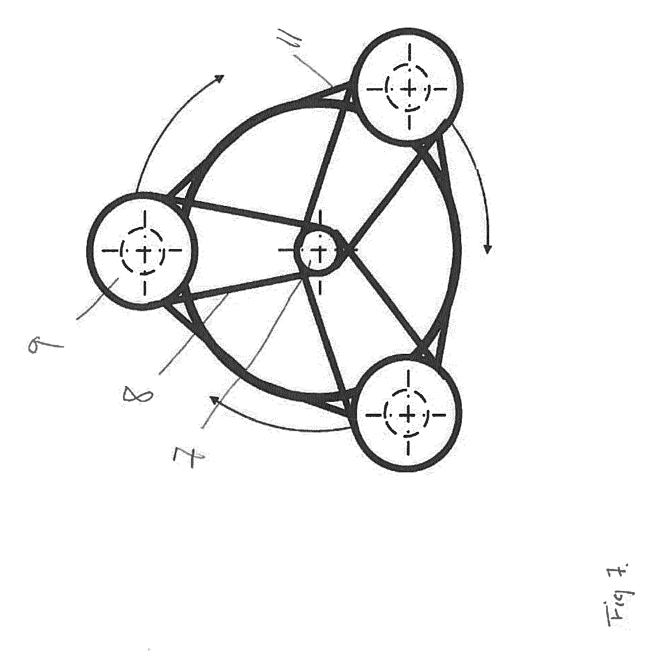

Fig 7 is a schematic view of the planet gear with three belt pulley 9 arranged at a substantially equal angular distance from each other. It would however be clear to a person skilled in the art that the belt pulleys 9 could have other angular positions that are more suitable according to the present invention.

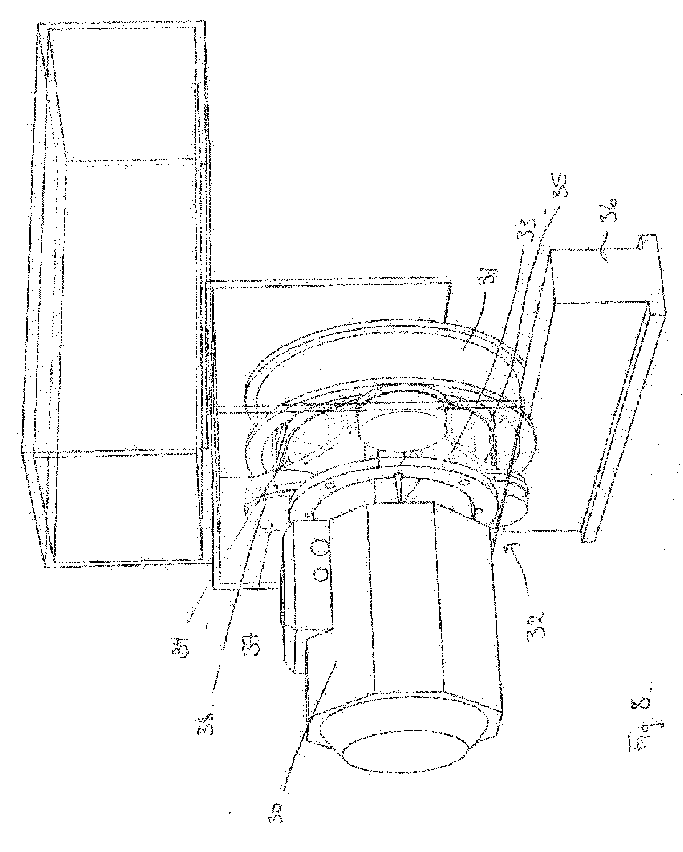

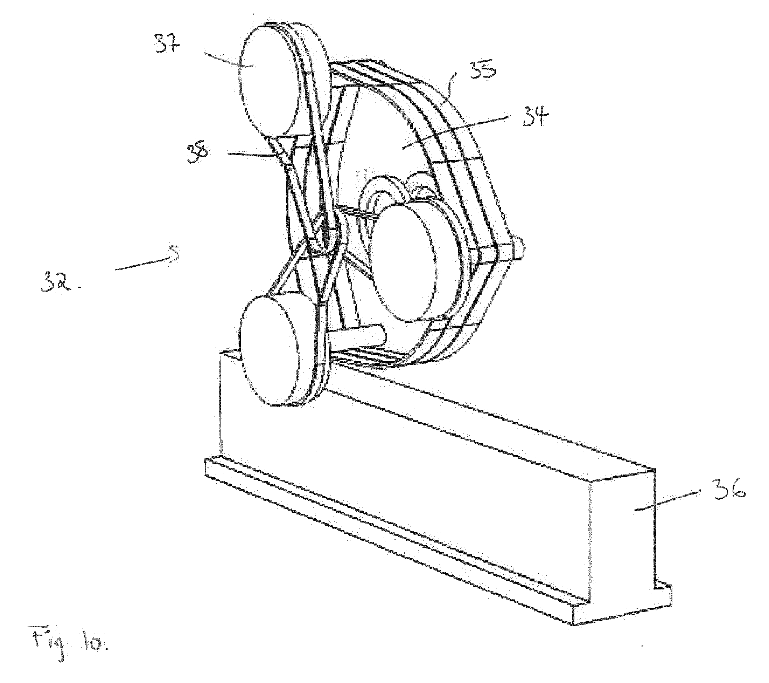

With reference to Figure 8-13 another possible embodiment according to the present invention is described. These figures relates to a drive device for a wheel motor on a traverse carriage and is further described in the following.

Fig 8 is shows a motor 30 which is the driving unit and a wheel 31 on a traverse carriage which is the driven unit. The drive device further comprises a transmission unit 32. The transmission unit 32comprises a planetary carrier 33, a large belt disc 34 and a large belt 35. Said large belt disc 34 and large belt 35 are arranged within the wheel 31 on the traverse carriage. The planetary carrier is similar to the planetary carrier 20 described in Figure 6.
The wheel on the traverser carriage is moving on a rail 36.

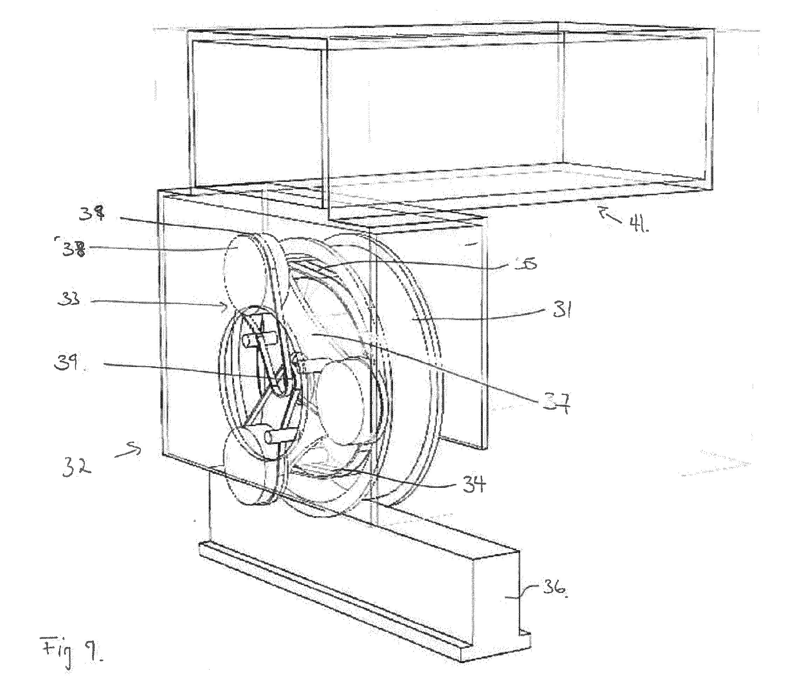

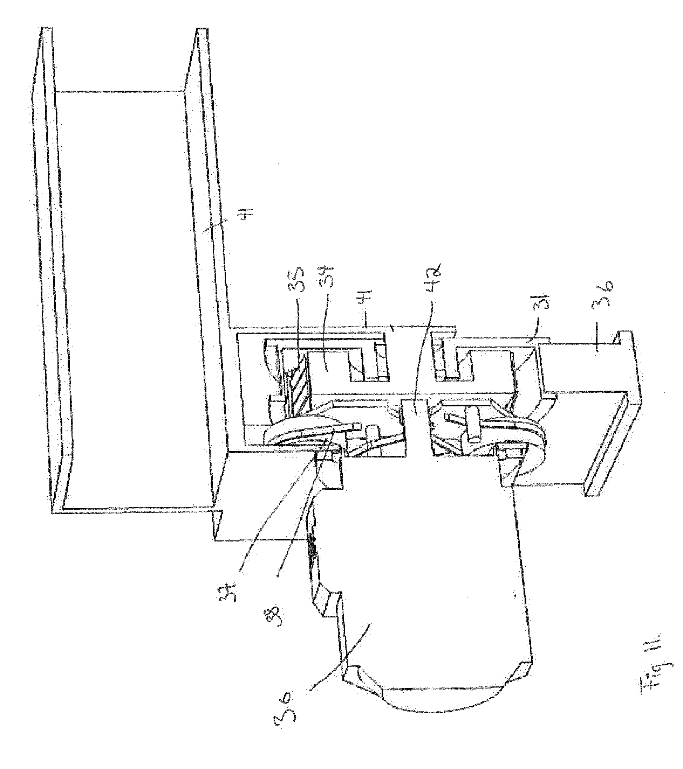

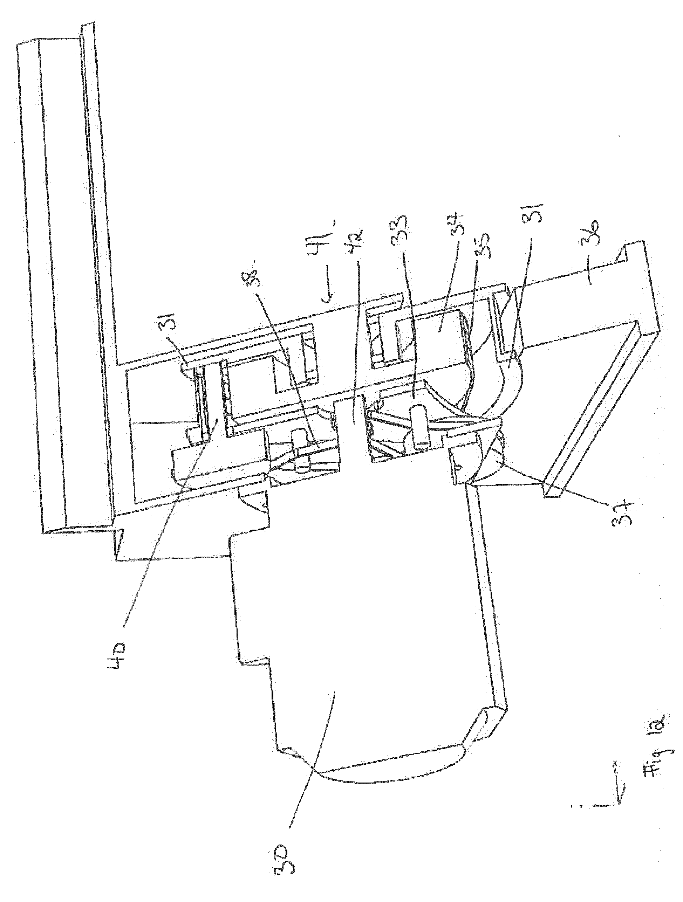

Fig 9-11 shows the drive device with the transmission unit 32 and the planetary carrier 33 of the wheel motor in more details. The planetary carrier 33 having a support structure which are similar to the support structure described in previous embodiment with at least two belt pulley shaft 40 (fig 12). Each belt pulley shaft 40 having with at least one planetary pulley 37 and at least one small planetary belt 38 arranged at the end or periphery of the planetary pulley 37. The belt pulley shaft 40 extending from the belt pulley 38 through a gap between the large belt disc 34 and the large belt 35 to the wheel 31, said belt pulley shaft 40 is received in a bearing in the wheel 31. The planetary pulley 37, belt pulley shaft 40 and the wheel 31 are in rotational coupling. A small belt pulley (not shown) could also be arranged on the belt pulley shaft 40 between the large disc 34 and the large belt 35. The belt pulley shaft 40 could also be in direct contact with the large belt 35 as described in earlier possible embodiments of the present invention. The small planetary belts 38 are extending around each of the belt pulley 37, the belt pulley and a high speed shaft 42 (Fig 11) which is connected to the motor, are in rotational connection.

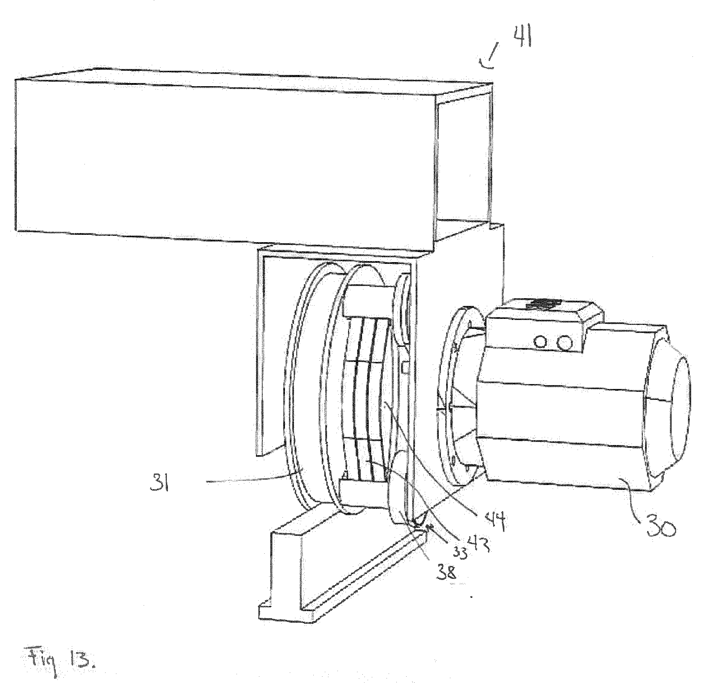

Figure 13 shows yet another possible embodiment of the present invention where the large belt disc 44 and the at least one large belt 43 extending around the large belt disc 44, are arranged between the wheel 31 and the planetary carrier 33.

The present invention has been described with reference to some preferred embodiments and some drawings for the sake of understanding only and it should be clear to persons skilled in the art that the present invention includes all legitimate modifications within the ambit of what has been described hereinbefore and claimed in the appended claims.

## Claims

1. A drive device comprising a transmission unit (2; 32) connected in one end to a driving unit (3), said transmission unit (2; 32) having a large belt disc (10; 34;44) with at least one large belt (11; 35; 43) extending around and in contact with the large belt disc (10; 34;44), and a high speed shaft (7;42) **characterized in that** the transmission unit (2; 32) comprises a planetary carrier (13; 20; 33) being coupled to said driving unit (3), said planetary carrier (13; 20; 33) carrying at least two planetary belt pulleys (9;37), each belt pulley (9;37) having a belt pulley shaft (6;26;40) which is in rotational coupling with the at least one large belt (11; 35; 43), each planetary pulley (9;37) having at least one planetary belt (8; 38), said planetary belt(s) (8; 38) rotationally coupling said planetary pulleys (9;37) with said high speed shaft (7;42), said large belt disc (10; 34;44) being stationary mounted, said high speed shaft (7;42) being coupled to a driven unit (15).

2. A drive device comprising a transmission unit (2; 32) connected in one end to a driven unit, said transmission unit (2) having a large belt disc (10; 34;44) with at least one large belt (11; 35; 43) extending around and in contact with the large belt disc (10; 34;44) ,and a high speed shaft (7;42) **characterized in that** the transmission unit (2) comprises a planetary carrier (13; 20; 33) being coupled to said driven unit, said planetary carrier (13; 20; 33) carrying at least two planetary belt pulleys (9;37), each belt pulley (9;37) having a belt pulley shaft (6;26;40) which is in rotational coupling with the at least one large belt (11; 35; 43), each planetary pulley (9;37) having at least one planetary belt (8; 38), said planetary belt(s) (8; 38) rotationally coupling said planetary pulleys (9;37) with said high (7;42) said large belt (10; 34;44) being stationary mounted, said high (7;42) being coupled to a driving unit.

3. A drive device according to claim 1 or 2, **wherein** the transmission unit (2) having three planetary pulleys (9; 37) at separate angular positions.

4. A drive device according to any one of claim 1-3, **wherein** each angular positioned planetary belt pulley (9; 37) having at least two planetary belts (8; 38) arranged parallel to each other on the planetary belt pulleys (9;37).

5. A drive device according to claim 4, **wherein** each belt pulley shaft (6) having two planetary belt pulleys (9;37) arranged parallel to each other and rotationally coupled to the same belt pulley shaft (6;26;40).

6. A drive device according to any one of claim 1-5, **wherein** the belt pulley shaft (6;26;40) is coupled to a small belt pulley (14), said small belt pulley (14) being in contact with the large belt (11; 35; 43).

7. A drive device according to any one of claim 1-6, **wherein** the belt pulley shaft (6;26;40) is in direct contact with the large belt (11; 35; 43).

8. A drive device according to any one of claim 1-7, **wherein** the planetary belt carrier (20) has a first planetary carrier member (20a) and a second planetary carrier member (20b), the first and second carrier member (20a, 20b) being arranged on opposite axial side of the large belt disc (10; 34;44), the belt pulley shaft (26) extending from the at least one belt pulley (9; 37) through said first planetary member (20a), the gap between the large belt (11; 35; 43) and the large belt disc (10; 34;44) to the second planetary member (20b).

9. A drive device according to any one of claim 1-8, wherein the large belt (11; 35; 43) comprises of two or more belts arranged parallel to each other on the large belt disc (10; 34;44).

10. A drive device according any one of claims 1, 3-9, **wherein** the driving unit (3) is a wind turbine rotor.

11. A drive device according to any one of claims 1, 3-9, **wherein** the driving unit (3) is a wave power rotor.

12. A drive device according to any one of claims 1, 3-11, **wherein** the driven unit (15) is a generator.

13. A drive device according to any one of claims 2-9, **wherein** the driven unit is a winch.

14. A drive device according to any one of claims 2-9, **wherein** the driven unit is a wheel (31) on a traverser carriage (41).

15. A drive device according to claim 14, wherein at least the large belt disc (34) is stationary coupled to the traverse carriage (41).

16. A drive device according to claims 14 or 15, **wherein** the large belt disc (34) and at the least one large belt (35) extending around the large belt disc (34) are arranged at the inside of the wheel (31) on the traverse carriage (41).

17. A drive device according to claims 14 or 15, **wherein** the large belt disc (44) and the at least one large belt (43) extending around the large belt disc (44) are arranged between the wheel (31) and the planetary carrier (33).

18. A drive device according to any of the proceeding claims 13-17, **wherein** each of the belt pulley shafts (40) is received in a bearing in the wheel (30) of the traverse carriage (41).
